# EUROPEAN PATENT APPLICATION

(11) **EP 4 195 150 A1**
(43) Date of publication of application: **14.06.2023**
(21) Application number: 20953782.8
(22) Date of filing: 21.09.2020
(51) Int. Cl.: G06T 7/246

(54) **TARGET POSITIONING METHOD AND DEVICE, AND COMPUTER-READABLE MEDIUM**

(71) Applicant: Siemens Ltd., China, Chaoyang District Beijing 100102 (CN)
(72) Inventor: LI, Yuanzhe, Beijing 100012 (CN); MIN, Jie, Beijing 100091 (CN)
(74) Representative: Isarpatent
(86) International application number: PCT/CN2020/116575
(87) International publication number: WO 2022/056924

(57) **Abstract**

A target positioning method and device, and a computer-readable medium, relating to computer vision technologies and used for determining the position of a target object in a real physical environment. The method comprises: acquiring (S406) a first frame of picture from a first camera; recognizing (S407) the target object in the first frame of picture; determining (S408) a second area in which the target object is positioned in the first frame of picture; and determining (S409) a first area corresponding to the second area in which the target object is positioned. The problem that the function between the position in a picture taken by a camera obtained through curve fitting and the position in the physical environment is inaccurate is avoided. Compared to complex curve fitting, the use of correspondences between a finite number of areas as position relationships is easy to achieve, and has the advantages of simplicity and accuracy in scenarios which do not require high-accuracy vehicle positioning, such as determining whether a car is parked into a certain space for the purposes of car parking management.

## Description

### Technical field

The embodiments of the present invention relate to the technical field of computer vision, in particular to a target positioning method and apparatus and a computer-readable medium.

### Background art

In applications such as parking surveillance, vehicle tracking and staff positioning, positioning of the tracked target is necessary. There are many target positioning methods, for example positioning by the global positioning system (GPS). However, GPS positioning requires that the tracked target upload its GPS position information, which often involves the privacy of individuals, so cannot be widely adopted in applications such as parking surveillance.

One method of positioning is to use a camera to capture an image of a target object, and position the target object by means of image processing and target identification. However, with target identification, one can only determine the position of the target object in a picture, and then map the position of the target object in the picture to a position in a physical environment, to realize positioning of the target object.

It is possible to acquire coordinates of each mark in the physical environment, as well as pixel coordinates of these marks in the picture of the physical environment captured by the camera, and perform curve fitting to obtain a function of the correspondence between the position in the picture captured by the camera and the position in the physical environment. However, curve fitting has limitations, and the function thus obtained might be inaccurate, in which case the position in the physical environment determined according to the fitted curve might be inaccurate.

### Summary of the invention

The embodiments of the present invention provide a target positioning method and apparatus, and a computer-readable medium, for determining the position of a target object in a real physical environment.

In a first aspect, a target positioning method is provided. In the method, at least one mark in a physical environment is determined, the physical environment is divided into at least two first regions according to the at least one mark, the at least one mark is identified from a picture of the physical environment captured by a first camera, the physical environment in the picture captured by the first camera is divided into at least two second regions in the same way as for the at least two first regions, and a one-to-one correspondence between the at least two first regions and the at least two second regions is thereby determined. When positioning the target object, a first frame is acquired from the first camera, a target object is identified from the first frame, a second region of the target object in the first frame is determined, and the first region corresponding to the second region where the target object is located is determined according to the correspondence.

In a second aspect, a target positioning apparatus is provided, and the apparatus may comprise:
- a position mapping module, configured to: determine at least one mark in a physical environment, divide the physical environment into at least two first regions according to the at least one mark, identify the at least one mark from a picture of the physical environment captured by a first camera, divide the physical environment in the picture captured by the first camera into at least two second regions in the same way as for the at least two first regions, and determine a one-to-one correspondence between the at least two first regions and the at least two second regions; a picture processing module, configured to acquire a first frame from the first camera;
- a target identifying module, configured to identify a target object from the first frame;
- the position mapping module being further configured to determine a second region of the target object in the first frame, and determine the first region corresponding to the second region where the target object is located according to the correspondence.

In a third aspect, a target positioning apparatus is provided, comprising: at least one memory, configured to store computer-readable code; at least one processor, configured to call the computer-readable code, to perform the steps provided in the first aspect.

In a fourth aspect, a computer-readable medium is provided, the computer-readable medium having stored thereon computer-readable instructions which, when executed by a processor, cause the processor to perform the steps provided in the first aspect.

The correspondence between limited regions is used as a positional relationship; implementation is simple, complex curve fitting is avoided, and in the case of scenarios that do not require high precision in vehicle positioning, for example car park management, judging whether a vehicle parks in a particular parking space has the advantages of simplicity and accuracy. Optionally, in the case of a car park, the at least two first regions may be different parking spaces.

In any of the above aspects, optionally, when identifying a target object from the first frame, a coarse-grained feature of the target object may be extracted, the coarse-grained feature comprising at least one of color, shape, contour and marker; motion vector information of the target object may be determined; and a determination may be made as to whether the target object appears in a picture captured by a camera other than the first camera according to the coarse-grained feature and motion vector information of the target object. There is no need to use a complex deep learning algorithm for trans-camera feature matching, and it is possible to use the same camera to cover multiple surveillance regions, avoiding wastage of edge devices.

In any of the above aspects, optionally, the physical environment may also be displayed in simulated form; and the target object may be displayed in the determined first region where the target object is located in the simulated physical environment. This has the advantages of being visually direct and clear.

Furthermore, optionally, the at least two first regions may also be displayed in the simulated physical environment. The displaying of all of the first regions allows an observer to observe the position of the target object more conveniently and clearly.

Moreover, it is also possible to receive information of a set of positions of the target object in the physical environment, wherein the set of positions is first regions of the target object in the physical environment respectively determined from a set of chronologically consecutive pictures of the identified target object; and display the target object in each first region corresponding to the set of positions in chronological order in the simulated physical environment. Tracking of the target object in the simulated physical environment is thus achieved.

In any of the above aspects, optionally, it is also possible to acquire information of a first region, in the physical environment, of the target object identified in a second frame, wherein the second frame is captured at the same time as the first frame; and update the first region of the target object in the physical environment according to respective first regions, in the physical environment, of the target object identified in the first frame and the second frame respectively. When the same target object appears at the same time in pictures captured by different cameras, accurate positioning of the target object may be achieved through this optional manner of implementation.

Furthermore, when updating the first region of the target object in the physical environment, a comparison may be made of the sizes of the second region where the target object is located in the first frame and the second region where the target object is located in the second frame; and the first region corresponding to the larger second region may be taken to be the updated first region. Since the larger second region indicates a shorter distance between the camera and the target object, the accuracy of target identification will generally be higher.

In any of the above aspects, optionally, the target object is a vehicle, and the at least two first regions are different parking spaces.

### Brief description of the drawings

Fig. 1 is a structural schematic drawing of a target positioning system provided in an embodiment of the present invention.
Fig. 2 is a structural schematic drawing of a target positioning apparatus provided in an embodiment of the present invention.
Fig. 3 is a schematic drawing showing the relationships between a main node and sub-nodes of a target positioning apparatus in a target positioning system provided in an embodiment of the present invention.
Fig. 4 is a flow chart of a target positioning method provided in an embodiment of the present invention.
Figs. 5A - 5E show the process of subjecting a target object to tracked positioning in an embodiment of the present invention.

### Key to the drawings:

| | | |
|---|---|---|
| 100: target positioning system | 10: camera | 11: target positioning apparatus |
| 11a: main target positioning apparatus | 11b: secondary target positioning apparatus | |
| 20: target positioning program | 111: at least one memory | 112: at least one processor |
| 113: communication module | 201: position mapping module | 202: picture processing module |
| 203: target identifying module | 204: tracking module | 205: action detecting module |
| 206: position updating module | 400: target positioning method | S401 - S416: method steps |

### Detailed description of the invention

The subject matter described herein is now discussed with reference to exemplary embodiments. It should be understood that these embodiments are discussed solely in order to enable those skilled in the art to better understand and thereby implement the subject matter described herein, without limiting the protection scope, applicability or examples expounded in the claims. The functions and arrangement of the discussed elements may be changed without departing from the protection scope of the content of the embodiments of the present invention. Various processes or components may be omitted, replaced or added in the examples as needed. For example, the described methods may be performed in a different order from that described, and various steps may be added, omitted or combined. Furthermore, features described in relation to some examples may also be combined in other examples.

As used herein, the term "comprising" and variants thereof represent open terms, meaning "including but not limited to". The term "based on" means "at least partly based on". The terms "one embodiment" and "an embodiment" mean "at least one embodiment". The term "another embodiment" means "at least one other embodiment". The terms "first", "second", etc. may denote different or identical objects. Other definitions, explicit or implicit, may be included below. Unless clearly stated in the context, the meaning of a term is the same throughout the specification.

Embodiments of the present invention are explained in detail below with reference to the drawings.

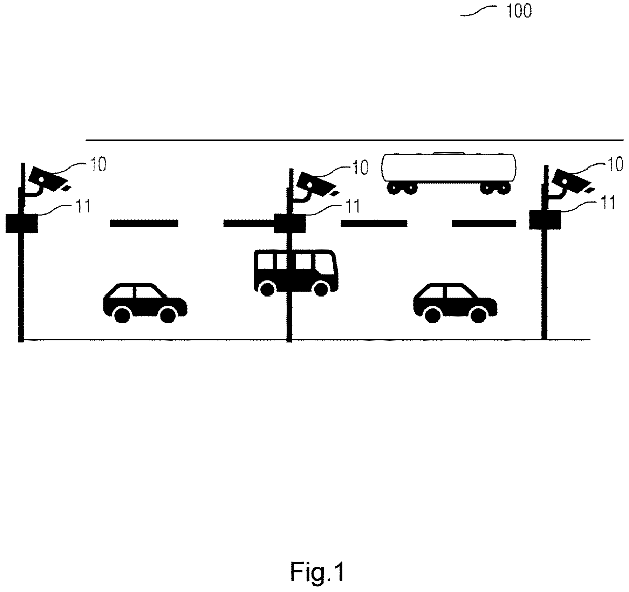

Fig. 1 shows a target positioning system 100 provided in an embodiment of the present invention, comprising at least one camera 10 for photographing at least one target object (e.g. a vehicle as shown in Fig. 1, or a pedestrian or article, etc.); a picture thus obtained is sent to a target positioning apparatus 11, and the target positioning apparatus 11 subjects the received picture to target identification and positioning.

Here, the target positioning apparatus 11 may be deployed at the Edge side, e.g. at the roadside, in a car park, or at the entrance to a school, etc., and the picture acquired by the camera 10 may be processed in real time at the Edge side, thus avoiding the transmission of large amounts of data. A single target positioning apparatus 11 may be connected to one or more cameras 10, and process pictures acquired by the cameras connected thereto. The target positioning apparatus 11 may also be integrated with one or more cameras 10 in the same physical device, and deployed at the Edge side. In addition, the target positioning apparatus 11 may also be deployed in the Cloud, in which case the picture acquired by the camera 10 located at the Edge side is transmitted to the target positioning apparatus 11 in the Cloud to undergo further target identification and positioning.

The cameras 10 may be synchronized with each other; taking a vehicle as an example, the same vehicle might appear at the same moment in pictures captured by two cameras 10, and because the cameras 10 are synchronized with each other, it may be concluded that the same vehicle appearing in the two pictures is located at the same position in the physical environment.

Each camera 10 acquires frames arranged in chronological order. The target object is positioned in each frame in which it appears, and a path of motion of the target object may be obtained according to the chronological order of the frames, i.e. the target object may be tracked. When the target positioning system 100 comprises multiple cameras 10, different cameras 10 monitor different regions, enabling trans-camera target tracking in a large scenario.

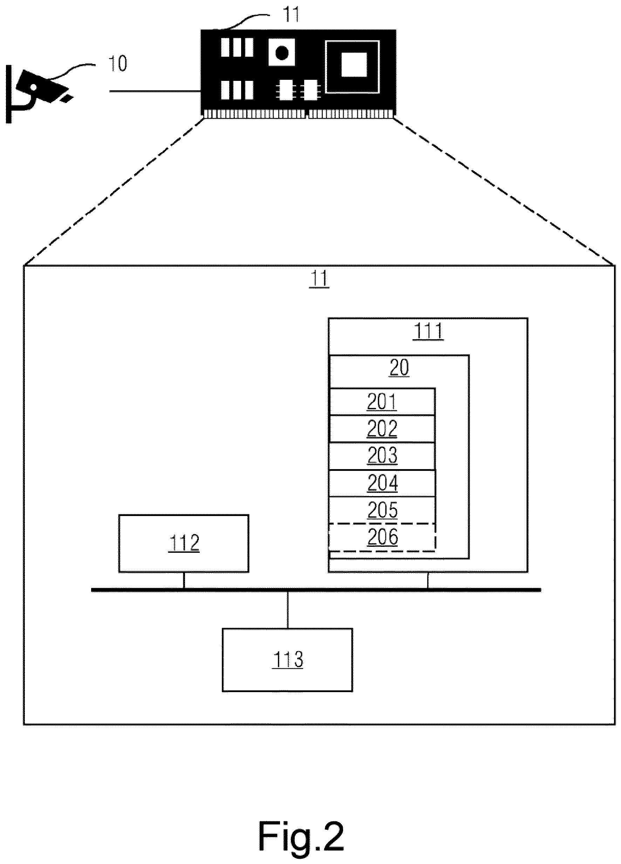

The target positioning apparatus 11 provided in embodiments of the present invention may be implemented as a network of computer processors, to perform a target positioning method 400 in embodiments of the present invention. The target positioning apparatus 11 may also be a single computer, a single board or a chip, as shown in Fig. 2, comprising at least one memory 111, which comprises a computer-readable medium, e.g. random access memory (RAM). The apparatus 11 further comprises at least one processor 112 coupled to the at least one memory 111. Computer-executable instructions are stored in the at least one memory 111, and when executed by the at least one processor 112, can cause the at least one processor 112 to perform the steps described herein. The at least one processor 112 may comprise a microprocessor, an application-specific integrated circuit (ASIC), a digital signal processor (DSP), a central processing unit (CPU), a graphics processing unit (GPU), a state machine, etc. Embodiments of the computer-readable medium include but are not limited to a floppy disk, CD-ROM, magnetic disk, memory chip, ROM, RAM, ASIC, configured processor, all-optical medium, all magnetic tapes or other magnetic media, or any other media from which instructions can be read by a computer processor. In addition, various other forms of computer-readable media may send or carry instructions to a computer, including routers, private or public networks, or other wired and wireless transmission devices or channels. The instructions may comprise code of any computer programming language, including C, C++ and C languages, Visual Basic, java and JavaScript. In addition, the target positioning apparatus 11 may also comprise a communication module 113 coupled separately to the at least one memory 111 and the at least one processor 112, for enabling communication between the target positioning apparatus 11 and an external device, e.g. receiving pictures from the camera 10.

When executed by the at least one processor 112, the at least one memory 111 shown in Fig. 1 may include a target positioning program 20, which causes the at least one processor 112 to perform the method 400 for target positioning described in embodiments of the present invention. The target positioning program 20 may comprise:
- A position mapping module 201, configured to determine a relationship between a position in a physical environment and a position in a picture of the physical environment captured by the camera 10. As stated above, a function relationship obtained by curve fitting might be inaccurate. In embodiments of the present invention, the position mapping module 201 first determines at least one mark in the physical environment (for example, in a traffic management scenario, a lane center line may be used as the mark, or marks may be set manually, etc.), and divides the physical environment into at least two first regions according to the at least one mark. In addition, the position mapping module 201 identifies the at least one mark from a picture of the physical environment captured by a camera (called the "first camera" here to distinguish it from other cameras), and divides the physical environment in the picture captured by the first camera into at least two second regions in the same way as for the at least two first regions, then determines a one-to-one correspondence between the at least two first regions and the at least two second regions. The physical environment is an environment in which the target object is located, e.g. a road on which a vehicle is located (a 2D plane) or a space in which a vehicle is located (a 3D space); in the case of a 2D plane, the physical environment is divided into at least two first regions, and in the case of a 3D space, the physical environment is divided into at least two spaces, wherein the first region may be broadly construed as being a plane or a space.

The correspondence between limited regions is used as a positional relationship; implementation is simple, complex curve fitting is avoided, and in the case of scenarios that do not require high precision in vehicle positioning, for example car park management, judging whether a vehicle parks in a particular parking space has the advantages of simplicity and accuracy. Optionally, in the case of a car park, the at least two first regions may be different parking spaces.

In addition, the target positioning program 20 may also comprise:
- A picture processing module 202, configured to acquire a first frame (different from a picture acquired by another camera 10 described later) from the first camera 10, and subject this frame to coding/decoding. It may use resources of a graphics processing unit (GPU) to speed up picture processing, to meet real-time requirements.
- A target identifying module 203, configured to identify a target object from the first frame; perform real-time identification of the target object, and optionally, extract a feature of the target object.
- The position mapping module 201 is further configured to determine a second region of the target object in the first frame, and determine the first region corresponding to the second region in which the target object is located according to the correspondence obtained.

In addition, the target positioning program 20 may also comprise a tracking module 204, configured to track the target object under the camera to which it is connected. For a main node 11a, it is also necessary to perform trans-camera tracking of the target object in the whole target positioning system 100. Optionally, the tracking module 204 may also display a simulated physical environment, and display the target object in the simulated physical environment according to the first region determined by the position mapping module 203. A linear fitting method may be used to generate a 3D physical environment and display the target object.

Optionally, the target positioning program 20 may also comprise an action computing module 205, configured to determine action information of the target object (e.g. movement, stopping, and the direction of motion of the target object) according to variation of the determined position of the target object with time, i.e. the path of the target object.

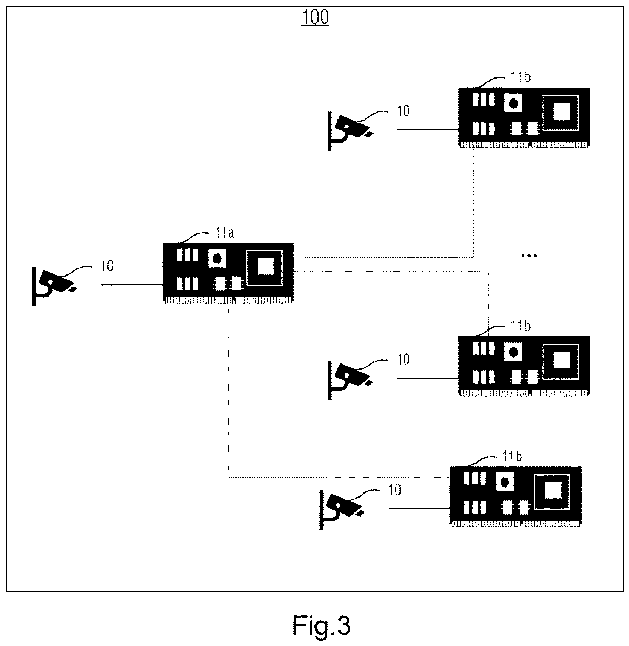

As shown in Fig. 3, the target positioning apparatus 11 may be divided into a main node 11a and sub-nodes 11b, the single main node 11a being connected to the sub-nodes 11b. One target positioning apparatus 11 may be connected to one or more cameras. Account is taken of the fact that the same target object might appear at the same moment in two or more pictures captured by cameras connected to the target positioning apparatus 11. When positioning the target object, it is necessary to determine a final position of the target object in the physical environment according to multiple determined positions. Thus, in embodiments of the present invention, each sub-node 11b sends its own positioning result to the main node 11a, the main node 11a makes a comparison with each sub-node 11b, and the target positioning program 20 further comprises a position updating module 206, configured to receive information from each sub-node 11b, and determine the position of the target object in the physical environment according to the positions determined by different sub-nodes 11b for the same target object at the same moment. Optionally, wireless data transmission may be used between each sub-node 11b and the main node 11a; for example, a 4G network may be used for transmission.

It should be mentioned that embodiments of the present invention may comprise an apparatus with a different architecture from that shown in Fig. 2. That architecture is merely exemplary, used to explain the method 400 provided in embodiments of the present invention.

In addition, the modules mentioned above may also be regarded as functional modules realized by hardware, for realizing the various functions involved when the target positioning apparatus 11 performs the target positioning method; for example, control logic of each procedure involved in the method is burnt into a field-programmable gate array (FPGA) chip or complex programmable logic device (CPLD) for example in advance, and these chips or devices perform the functions of the modules mentioned above, wherein the specific manner of implementation may be determined according to engineering practice.

For other optional ways of realizing the modules mentioned above, refer to the description in the method 400.

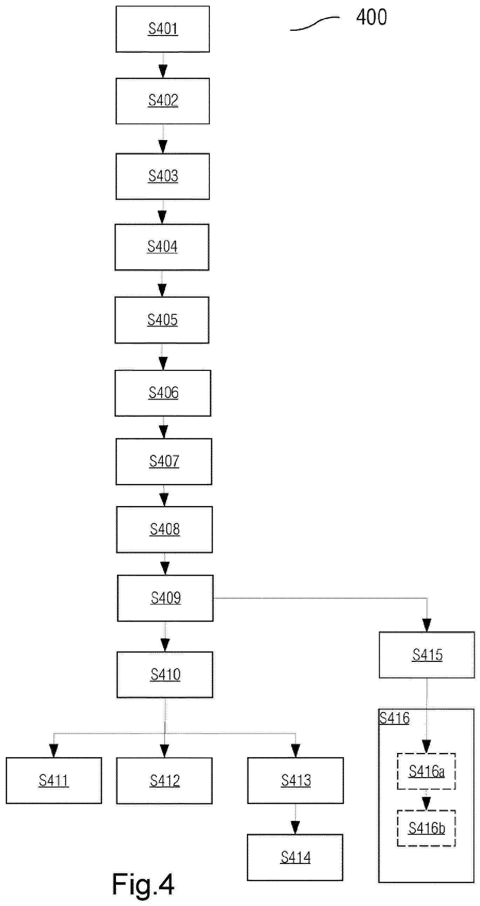

As shown in Fig. 4, an exemplary method 400 according to embodiments of the present invention comprises the following steps:
- S401: determining at least one mark in a physical environment;
- S402: dividing the physical environment into at least two first regions according to the at least one mark;
- S403: identifying the at least one mark from a picture of the physical environment captured by a first camera;
- S404: dividing the physical environment in the picture captured by the first camera into at least two second regions in the same way as for the at least two first regions;
- S405: determining a one-to-one correspondence between the at least two first regions and the at least two second regions.

In steps S401 - S405, the physical environment is divided into a number of first regions according to the mark in the physical environment; after the first camera has photographed the physical environment, the mark in the physical environment is identified from the captured picture, and the same method is used to divide the physical environment in the picture into a number of second regions according to the mark. The second regions and first regions are then matched up according to these marks, to form a correspondence between the first regions and the second regions. Using this correspondence, when the first camera photographs the physical environment and the captured picture is subjected to target identification and positioning, due to the fact that the positional relationship between the field of view of the camera and the physical environment does not change, the correspondence previously determined may be used to determine the first region where a target object is located in the physical environment according to the second region where the target object is located in the picture in steps S406 - S409 below, thus achieving the objective of positioning the target object.

In method 400, identification and positioning of the target object are achieved through steps S406 - S409 below:
- S406: acquiring a first frame from the first camera;
- S407: identifying a target object from the first frame;
- S408: determining a second region of the target object in the first frame;
- S409: determining the first region corresponding to the second region where the target object is located according to the correspondence.

In existing methods for target identification and tracking, one manner of implementation is as follows: target objects are identified separately from pictures captured by different cameras, and all of the identified target objects are subjected to feature matching, wherein a complex deep learning algorithm such as a neural network is used, which has high requirements with regard to equipment computing power, and therefore can only be realized via a Cloud server; this not only increases the cost of the system, but also introduces delays in data transmission and processing, so is unable to meet real-time requirements. In another manner of implementation, surveillance cameras are deployed at a high density; for example, in the application scenario of roadside parking management, one camera is deployed beside one parking space, and is specifically used for monitoring the parking state of that parking space. These densely deployed cameras capture passing vehicles continuously in chronological order, generating a large amount of redundant information, wasting equipment computing power, and thus increasing the cost of the entire system.

In embodiments of the present invention, trans-camera tracking of a target object is possible. Specifically, trans-camera target identification and tracking may be performed according to coarse-grained features of the target object, such as color, shape, contour, marker light information, and target object motion vector information. Thus, step S407 above may specifically comprise the following sub-steps:
- extracting a coarse-grained feature of the target object, the coarse-grained feature comprising at least one of color, shape, contour and marker;
- determining motion vector information of the target object;
- determining whether the target object appears in a picture captured by a camera other than the first camera according to the coarse-grained feature and motion vector information of the target object.

This avoids the use of a complex deep learning algorithm for trans-camera feature matching in the first manner of implementation mentioned above. It is also possible to use the same camera to cover multiple surveillance regions, avoiding wastage of edge devices.

Optionally, target object positioning may also be achieved in a simulated physical environment. Specifically, method 400 may further comprise the following steps:
- S410: displaying the physical environment;
- S411: displaying the target object in the determined first region where the target object is located in the simulated physical environment.

Moreover, optionally, method 400 may further comprise:
- S412: displaying the at least two first regions in the simulated physical environment.

The displaying of all of the first regions allows an observer to observe the position of the target object more conveniently and clearly.

Optionally, it is also possible to track the target object in the simulated physical environment, and display a motion path of the target object; specifically, method 400 may further comprise the following steps:
- S413: receiving information of a set of positions of the target object in the physical environment, wherein the set of positions is first regions of the target object in the physical environment respectively determined from a set of chronologically consecutive pictures of the identified target object;
- S414: displaying the target object in each first region corresponding to the set of positions in chronological order in the simulated physical environment.

Steps S410 - S414 may also be performed by a Cloud server, which displays the physical environment; the target positioning apparatus 11 located at the Edge side sends positioning information of the target object to the server, which displays the target object in the environment according to the received positioning information.

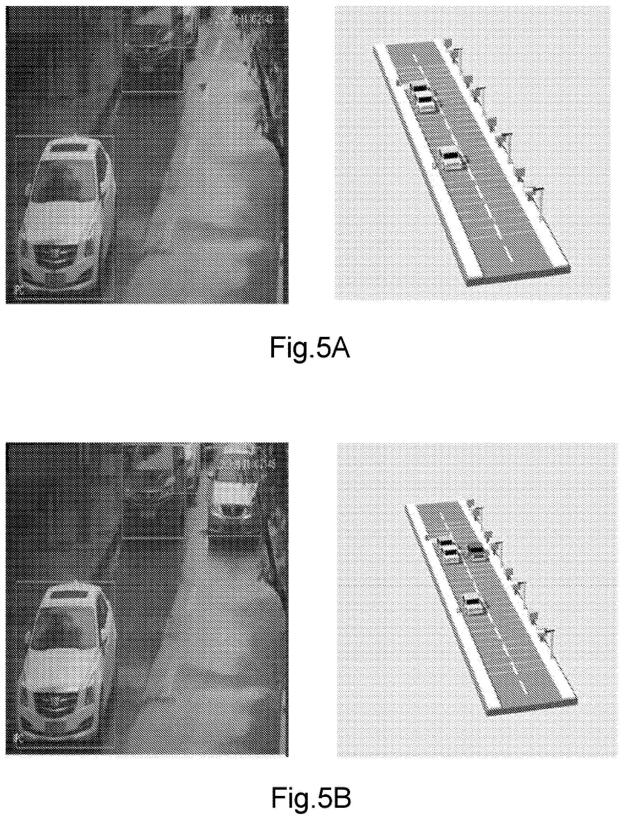

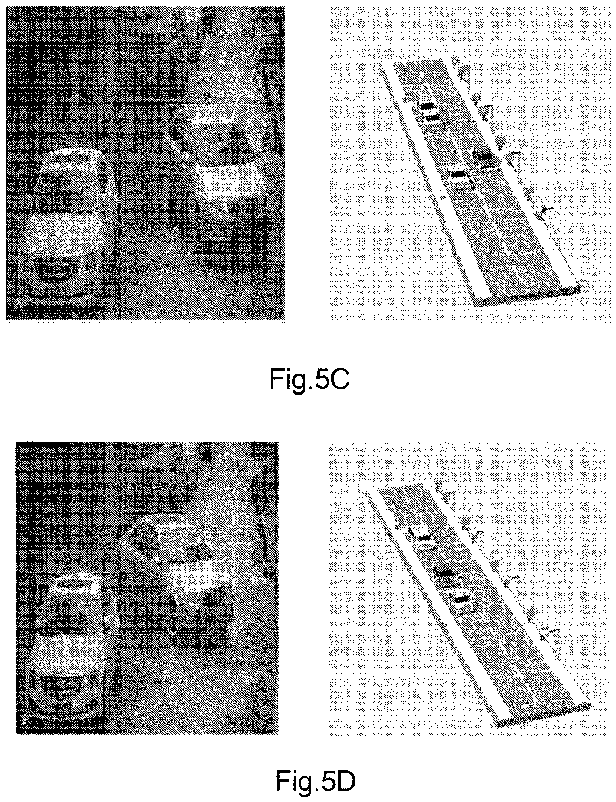

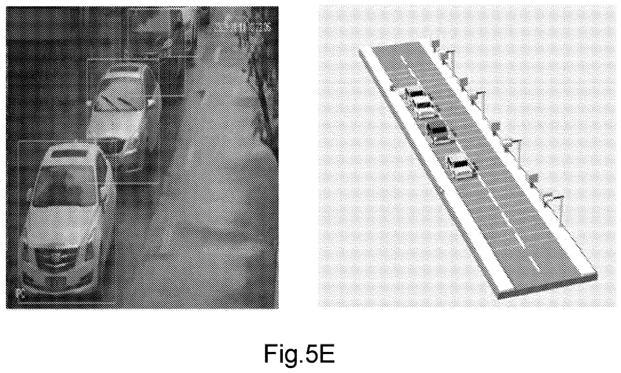

In each of Figs. 5A - 5E, a real physical environment is shown on the left, and a physical environment is shown on the right. In the real physical environment, a lane center line serves as a mark, dividing the physical environment into first regions. In the corresponding physical environment, a lane center line is also displayed as a mark; in addition, second regions respectively corresponding to the first regions are also displayed. Figs. 5A - 5E are arranged in chronological order. In Fig. 5A, the target vehicle being monitored has not yet appeared, and other vehicles are respectively located in different second regions of the left lane; from the correspondence between the second regions and the first regions, and the marks shown (i.e. the "lane center lines"), the position of each vehicle can be seen clearly from the physical environment on the right, and the position of each vehicle in the physical environment can be determined in a visually direct manner. In Fig. 5B, the target vehicle being monitored approaches in the right lane; in Fig. 5C, the vehicle being monitored is about to reverse into a parking space, and in the simulated physical environment the target vehicle is located to the right of the frontmost vehicle; in Fig. 5D, most of the body of the target vehicle being monitored (the part contained in the bounding box) has entered the parking space behind the frontmost vehicle, so in the simulated physical environment the target vehicle being monitored is judged to be located in the parking space behind the frontmost vehicle; in Fig. 5E, the distance between the target vehicle and the frontmost vehicle has increased in comparison with Fig. 5D because the position of the target vehicle in the parking space has been adjusted, and this can be clearly displayed in the physical environment on the right in Fig. 5E.

As stated above, the same target object might appear at the same moment in pictures captured by two or more cameras connected to the target positioning apparatus 11. When positioning the target object, it is possible to determine a final position of the target object in the physical environment according to multiple determined positions. Thus, method 400 may further comprise the following steps:
- S415: acquiring information of a first region, in the physical environment, of the target object identified in a second frame, wherein the second frame is captured at the same time as the first frame;
- S416: updating the first region of the target object in the physical environment according to respective first regions, in the physical environment, of the target object identified in the first frame and the second frame respectively.

Step S416 may further comprise the following sub-steps:
- S416a: comparing the sizes of the second region where the target object is located in the first frame and the second region where the target object is located in the second frame;
- S416b: taking the first region corresponding to the larger second region to be the updated first region. This is because the larger second region indicates a shorter distance between the camera and the target object, and the accuracy of target identification will generally be higher.

In addition, the embodiments of the present invention further provide a computer-readable medium, having stored thereon computer-readable instructions which, when executed by a processor, cause the processor to perform the target positioning method described above. Embodiments of the computer-readable medium include a floppy disk, hard disk, magnetooptical disk, optical disk (e.g. CD-ROM, CD-R, CD-RW, DVD-ROM, DVD-RAM, DVD-RW, DVD+RW), magnetic tape, non-volatile memory card and ROM. Optionally, computer-readable instructions may be downloaded via a communication network from a server computer or the Cloud.

In summary, the embodiments of the present invention provide a target positioning method, apparatus and system and a computer-readable medium. A mark in the physical environment is used to divide into regions, and a target object is positioned by means of the correspondence between a region in the physical environment and a region in the picture; compared with the existing method of using curve fitting to determine a function of a position correspondence between a physical environment and a picture captured by a camera, errors in function fitting can be effectively avoided.

Furthermore, the fusion of multiple cameras enables the identification and tracking of the same target object among different cameras according to coarse-grained features and motion vector information of the target object. Compared with the use of a deep learning algorithm to perform feature matching in pictures acquired by multiple cameras, this technical solution is simpler to implement and requires lower equipment computing power, so is able to achieve trans-camera target tracking in real time at the Edge side. It not only makes full use of the resources of multiple cameras, but also avoids complex algorithms. It may be used for static and dynamic traffic management in large scenarios.

In trans-camera scenarios, the same target object might appear in pictures captured by different cameras at the same time; in the embodiments of the present invention, the position of the target object in the physical environment is finally determined according to the results of positioning by different cameras, thus achieving trans-camera continuous tracking of the target object, with accurate positioning.

In addition, the physical environment is simulated and the target object is displayed in the simulated physical environment according to the positioning region; furthermore, the target object may also be tracked, enabling an observer to monitor the target object clearly in a visually direct manner.

With regard to system structure, the main node in the target positioning apparatus collects positioning information of the sub-nodes to realize trans-camera tracking of the target object, as well as updating of target object position; the processing does not rely on a Cloud server, and has the advantages of being real-time and saving computing power.

It must be explained that not all of the steps and modules in the procedures and system structure diagrams described above are necessary; certain steps or modules may be omitted according to actual needs. The order in which the steps are performed is not fixed, and may be adjusted as needed. The system structure described in the above embodiments may be a physical structure or a logic structure, i.e. some modules might be realized by the same physical entity, or some modules might be realized by multiple physical entities, or could be realized jointly by certain components in multiple independent devices.

## Claims

1. A target positioning method (400), **characterized by** comprising:
- determining (S401) at least one mark in a physical environment;
- dividing (S402) the physical environment into at least two first regions according to the at least one mark;
- identifying (S403) the at least one mark from a picture of the physical environment captured by a first camera;
- dividing (S404) the physical environment in the picture captured by the first camera into at least two second regions in the same way as for the at least two first regions;
- determining (S405) a one-to-one correspondence between the at least two first regions and the at least two second regions;
- acquiring (S406) a first frame from the first camera;
- identifying (S407) a target object from the first frame;
- determining (S408) a second region of the target object in the first frame;
- determining (S409) the first region corresponding to the second region where the target object is located according to the correspondence.

2. The method as claimed in claim 1, **characterized in that** identifying (S407) a target object from the first frame comprises:
- extracting a coarse-grained feature of the target object, the coarse-grained feature comprising at least one of color, shape, contour and marker;
- determining motion vector information of the target object;
- determining whether the target object appears in a picture captured by a camera other than the first camera according to the coarse-grained feature and motion vector information of the target object.

3. The method as claimed in claim 1, **characterized by** further comprising:
- displaying (S410) the physical environment in simulated form;
- displaying (S411) the target object in the determined first region where the target object is located in the simulated physical environment.

4. The method as claimed in claim 3, **characterized by** further comprising:
- displaying (S412) the at least two first regions in the simulated physical environment.

5. The method as claimed in claim 3 or 4, **characterized by** further comprising:
- receiving (S413) information of a set of positions of the target object in the physical environment, wherein the set of positions is first regions of the target object in the physical environment respectively determined from a set of chronologically consecutive pictures of the identified target object;
- displaying (S414) the target object in each first region corresponding to the set of positions in chronological order in the simulated physical environment.

6. The method as claimed in claim 1, **characterized by** further comprising:
- acquiring (S415) information of a first region, in the physical environment, of the target object identified in a second frame, wherein the second frame is captured at the same time as the first frame;
- updating (S416) the first region of the target object in the physical environment according to respective first regions, in the physical environment, of the target object identified in the first frame and the second frame respectively.

7. The method as claimed in claim 6, **characterized in that** updating (S416) the first region of the target object in the physical environment comprises:
- comparing (S416a) the sizes of the second region where the target object is located in the first frame and the second region where the target object is located in the second frame;
- taking (S416b) the first region corresponding to the larger second region to be the updated first region.

8. A target positioning apparatus (11), **characterized by** comprising:
- a position mapping module (201), configured to:
- determine at least one mark in a physical environment;
- divide the physical environment into at least two first regions according to the at least one mark;
- identify the at least one mark from a picture of the physical environment captured by a first camera;
- divide the physical environment in the picture captured by the first camera into at least two second regions in the same way as for the at least two first regions;
- determine a one-to-one correspondence between the at least two first regions and the at least two second regions;
- a picture processing module (202), configured to acquire a first frame from the first camera;
- a target identifying module (203), configured to identify a target object from the first frame;
- the position mapping module (201) being further configured to determine a second region of the target object in the first frame, and determine the first region corresponding to the second region where the target object is located according to the correspondence.

9. The apparatus as claimed in claim 8, **characterized in that** the target identifying module (202), when identifying a target object from the first frame, is configured to:
- extract a coarse-grained feature of the target object, the coarse-grained feature comprising at least one of color, shape, contour and marker;
- determine motion vector information of the target object;
- determine whether the target object appears in a picture captured by a camera other than the first camera according to the coarse-grained feature and motion vector information of the target object.

10. The apparatus as claimed in claim 8, **characterized by** further comprising: a tracking module (204), configured to:
- display the physical environment;
- display the target object in the determined first region where the target object is located in the simulated physical environment.

11. The apparatus as claimed in claim 10, **characterized in that** the tracking module (204) is further configured to:
- display the at least two first regions in the simulated physical environment.

12. The apparatus as claimed in claim 10 or 11, **characterized in that** the tracking module (204) is further configured to:
- receive information of a set of positions of the target object in the physical environment, wherein the set of positions is first regions of the target object in the physical environment respectively determined from a set of chronologically consecutive pictures of the identified target object;
- display the target object in each first region corresponding to the set of positions in chronological order in the simulated physical environment.

13. The apparatus as claimed in claim 8, **characterized by** further comprising: a position updating module (206), configured to:
- acquire information of a first region, in the physical environment, of the target object identified in a second frame, wherein the second frame is captured at the same time as the first frame;
- update the first region of the target object in the physical environment according to respective first regions, in the physical environment, of the target object identified in the first frame and the second frame respectively.

14. The apparatus as claimed in claim 13, **characterized in that** the position updating module (206), when updating the first region of the target object in the physical environment, is configured to:
- compare the sizes of the second region where the target object is located in the first frame and the second region where the target object is located in the second frame;
- take the first region corresponding to the larger second region to be the updated first region.

15. A target positioning apparatus (11), **characterized by** comprising:
at least one memory (111), configured to store computer-readable code;
at least one processor (112), configured to call the computer-readable code, to perform the method as claimed in any one of claims 1 - 7.

16. A computer-readable medium, **characterized in that** the computer-readable medium has stored thereon computer-readable instructions which, when executed by a processor, cause the processor to perform the method as claimed in any one of claims 1 - 7.

17. The method, apparatus or computer-readable medium as claimed in claims 1 - 16, **characterized in that** the target object is a vehicle, and the at least two first regions are different parking spaces.
